(19) **Europäisches Patentamt / European Patent Office / Office européen des brevets**

(11) **EP 4 742 662 A1**

(12) **EUROPEAN PATENT APPLICATION**
published in accordance with Art. 153(4) EPC

(43) Date of publication:
**13.05.2026  Bulletin 2026/20**

(21) Application number: **24835311.2**

(22) Date of filing: **01.07.2024**

(51) International Patent Classification (IPC):
**H04N 19/117** *(2014.01)*

(52) Cooperative Patent Classification (CPC):
**H04N 19/117; H04N 19/159; H04N 19/182**

(86) International application number:
**PCT/CN2024/102805**

(87) International publication number:
**WO 2025/007830 (09.01.2025 Gazette 2025/02)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **04.07.2023  CN 202310818030**

(71) Applicant: **Vivo Mobile Communication Co., Ltd.
Dongguan, Guangdong 523863 (CN)**

(72) Inventors:
• **ZHOU, Chuan**
 **Dongguan, Guangdong 523863 (CN)**
• **LV, Zhuoyi**
 **Dongguan, Guangdong 523863 (CN)**

(74) Representative: **Walaski, Jan Filip
Venner Shipley LLP
200 Aldersgate
London EC1A 4HD (GB)**

(54) **INTRA-PREDICTION METHOD AND APPARATUS, AND DEVICE**

(57) The present application relates to the technical field of encoding and decoding, and discloses an intra-prediction method and apparatus, and a device. The method in embodiments of the present application comprises: performing filtering processing on template pixels corresponding to a target image block to obtain filtered template pixels, wherein the template pixels comprise at least some reconstructed pixels within an adjacent pixel region of the target image block; on the basis of the filtered template pixels, acquiring at least one intra-prediction mode and the amplitude of the at least one intra-prediction mode; on the basis of the amplitude of the at least one intra-prediction mode, determining a target intra-prediction mode among the at least one intra-prediction mode; and on the basis of the target intra-prediction mode, determining a target prediction value corresponding to the target image block.

Perform filtering processing on template samples corresponding to a target image block to obtain filtered template samples, where the template samples include at least part of reconstructed samples in a neighboring sample region of the target image block — 101

Obtain, based on the filtered template samples, at least one intra prediction mode and an amplitude of the at least one intra prediction mode — 102

Determine, based on the amplitude of the at least one intra prediction mode, a target intra prediction mode from the at least one intra prediction mode — 103

Determine, based on the target intra prediction mode, a target prediction value corresponding to the target image block — 104

FIG. 1

# Description

## CROSS-REFERENCE TO RELATED APPLICATIONS

This application claims priority to Chinese Patent Application No. 202310818030.2, filed with the China National Intellectual Property Administration on July 4, 2023, which is incorporated herein by reference in its entirety.

## TECHNICAL FIELD

This application pertains to the technical field of encoding and decoding, and specifically relates to an intra prediction method and apparatus, and a device.

## BACKGROUND

In the related decoder-side intra mode derivation (DIMD) technology, a decoder applies horizontal and vertical Sobel filters to samples in a template with a width of N around a block to perform gradient histogram calculation, then converts a gradient direction into an intra angular prediction mode, accumulates gradient intensities as an amplitude of a corresponding intra angular mode, and derives an intra prediction mode by comparing amplitudes in a gradient histogram. Due to the diversity of image textures in real video scenes, the amplitudes in the histogram calculated based on the above method tend to be relatively dispersed, making it difficult to obtain a dominant texture direction in the histogram. This results in low prediction accuracy of the prediction mode determined based on the histogram.

## SUMMARY

Embodiments of this application provide an intra prediction method and apparatus, and a device, so as to solve the prior-art problem that a prediction mode determined based on a histogram has a low prediction accuracy.

According to a first aspect, an intra prediction method is provided, including:

performing filtering processing on template samples corresponding to a target image block to obtain filtered template samples, where the template samples include at least part of reconstructed samples in a neighboring sample region of the target image block;
obtaining, based on the filtered template samples, at least one intra prediction mode and an amplitude of the at least one intra prediction mode;
determining, based on the amplitude of the at least one intra prediction mode, a target intra prediction mode from the at least one intra prediction mode; and
determining, based on the target intra prediction mode, a target prediction value corresponding to the target image block.

According to a second aspect, an intra prediction apparatus is provided, including:

a processing module configured to perform filtering processing on template samples corresponding to a target image block to obtain filtered template samples, where the template samples include at least part of reconstructed samples in a neighboring sample region of the target image block;
a first obtaining module configured to obtain, based on the filtered template samples, at least one intra prediction mode and an amplitude of the at least one intra prediction mode;
a first determining module configured to determine, based on the amplitude of the at least one intra prediction mode, a target intra prediction mode from the at least one intra prediction mode; and
a second determining module configured to determine, based on the target intra prediction mode, a target prediction value corresponding to the target image block.

According to a third aspect, an electronic device is provided. The electronic device includes a processor and a memory, where the memory stores a program or instructions capable of running on the processor, and when the program or instructions are executed by the processor, the steps of the method according to the first aspect are implemented.

According to a fourth aspect, an electronic device is provided, including a processor and a communication interface, where the processor is configured to: perform filtering processing on template samples corresponding to a target image block to obtain filtered template samples, where the template samples include at least part of reconstructed samples in a neighboring sample region of the target image block; obtain, based on the filtered template samples, at least one intra prediction mode and an amplitude of the at least one intra prediction mode; determine, based on the amplitude of the at least one intra prediction mode, a target intra prediction mode from the at least one intra prediction mode; and determine, based on the target intra prediction mode, a target prediction value corresponding to the target image block.

According to a fifth aspect, a readable storage medium is provided, where the readable storage medium stores a program or instructions, and when the program or instructions are executed by a processor, the steps of the method according to the first aspect are implemented.

According to a sixth aspect, a chip is provided. The chip includes a processor and a communication interface, where the communication interface is coupled to the processor, and the processor is configured to run a program or instructions to implement the method according to the first aspect.

According to a seventh aspect, a computer program/program product is provided, where the computer program/program product is stored in a storage medium, and the computer program/program product is executed by at least one processor to implement the steps of the method according to the first aspect.

In the embodiments of this application, filtering processing is performed on template samples corresponding to a target image block to obtain filtered template samples, where the template samples include at least part of reconstructed samples in a neighboring sample region of the target image block; at least one intra prediction mode and an amplitude of the at least one intra prediction mode are obtained based on the filtered template samples; a target intra prediction mode is determined from the at least one intra prediction mode based on the amplitude of the at least one intra prediction mode; and a target prediction value corresponding to the target image block is determined based on the target intra prediction mode. In the above solution, performing filtering on the template samples allows an amplitude of an intra prediction mode corresponding to a dominant texture direction of the template samples to be more prominent, so that a target intra prediction mode that can reflect the dominant texture direction of the target image block can be obtained based on the filtered template samples, and then prediction accuracy can be effectively improved based on the target intra prediction mode.

**BRIEF DESCRIPTION OF DRAWINGS**

FIG. 1 is a schematic flowchart of an intra prediction method according to an embodiment of this application;

FIG. 2 is a first schematic diagram of filtered template samples according to an embodiment of this application;

FIG. 3 is a second schematic diagram of filtered template samples according to an embodiment of this application;

FIG. 4 is a schematic diagram showing a first part of samples and a second part of samples according to an embodiment of this application;

FIG. 5 is a schematic diagram showing modules of an intra prediction apparatus according to an embodiment of this application;

FIG. 6 is a structural block diagram of an electronic device according to an embodiment of this application; and

FIG. 7 is a structural block diagram of a terminal according to an embodiment of this application.

**DESCRIPTION OF EMBODIMENTS**

The following describes the technical solutions in the embodiments of this application clearly with reference to the accompanying drawings in the embodiments of this application. Apparently, the described embodiments are some but not all of the embodiments of this application. All other embodiments obtained by persons of ordinary skill in the art based on the embodiments of this application fall within the protection scope of this application.

The terms "first", "second", and the like in this application are used to distinguish between similar objects rather than to describe a specific order or sequence. It should be understood that terms used in this way are interchangeable in appropriate circumstances such that the embodiments of this application can be implemented in other orders than the order illustrated or described herein. In addition, objects distinguished by "first" and "second" are generally of a same type, and the quantities of the objects are not limited, for example, there may be one or more first objects. In addition, "or" in this application represents at least one of connected objects. For example, "A or B" covers three schemes, that is, scheme 1: including A and not including B; scheme 2: including B and not including A; and scheme 3: including both A and B. The character "/" generally indicates that the associated objects have an "or" relationship.

The term "indication" in this application may be a direct indication (or explicit indication) or an indirect indication (or implicit indication). A direct indication may be understood as a sender explicitly informing a receiver of content such as specific information, an operation to be performed, or a request result in a sent indication; an indirect indication may be understood as a receiver determining corresponding information based on an indication sent by a sender, or making a judgment and determining an operation to be performed, a request result, or the like based on a judgment result.

It should be noted that technologies described in the embodiments of this application are not limited to a long term evolution (LTE) or LTE-Advanced (LTE-A) system, and may also be applied to other wireless communication systems, for example, code division multiple access (CDMA), time division multiple access (TDMA), frequency division multiple access (FDMA), orthogonal frequency division multiple access (OFDMA), single-carrier frequency-division multiple access (SC-FDMA), and other systems. The terms "system" and "network" are often used interchangeably in the embodiments of this application. The technologies described may be used in the above-mentioned systems and radio technologies as well as other systems and radio technologies. In the following descriptions, a new radio (NR) system is described for illustration purpose, and NR terms are used in most of the following descriptions, although these technologies may also be applied to other applications than an NR system application, for example, the 6th generation (6G) communication system.

To enable those skilled in the art to better understand the embodiments of this application, the following description is first provided.

In video coding, one frame of image is divided into many macroblocks, and a prediction block is obtained using intra prediction or inter prediction. A difference between an original block and the prediction block is a residual block. The residual block is then transformed, quantized, and entropy coded.

(1) Intra prediction:

Intra prediction has many prediction modes to handle various types of textures in an image, including direct current (DC), planar, and some angular prediction modes. Surrounding reconstructed samples are used as input, and a prediction value of a current prediction block is obtained through a specified prediction mode, thereby achieving the purpose of removing spatial redundancy. The index of this specified prediction mode may be explicitly obtained from a bitstream or implicitly derived at a decoder side.

(2) DIMD:

DIMD mode is a technology for implicitly deriving an intra prediction mode. At a decoder side, horizontal and vertical Sobel filters are applied to samples in a template with a width of N around a block to perform gradient histogram calculation. A gradient direction is then converted into an intra angular prediction mode, and gradient intensities are accumulated as an amplitude of the corresponding intra angular prediction mode. An intra prediction mode is derived by comparing amplitudes in a gradient histogram. The template samples are at least part of the samples in a neighboring sample region of the target image block.

For a luma component, at most five intra prediction modes and their corresponding weights as well as the planar mode (with a fixed weight of 16/64) are derived from the histogram, so at most six intra prediction modes are fused to obtain a final luma prediction value.

For a chroma component, the DIMD chroma mode uses the DIMD derivation method to derive a chroma intra prediction mode of a current block based on neighboring reconstructed luma and chroma (Cb and Cr) samples in the second neighboring row and column. Specifically, the horizontal gradient and vertical gradient are calculated based on the reconstructed luma samples and reconstructed chroma samples at the corresponding positions of the current chroma block to construct a histogram.

The following details an intra prediction method according to an embodiment of this application with reference to the accompanying drawings through some embodiments and application scenarios thereof.

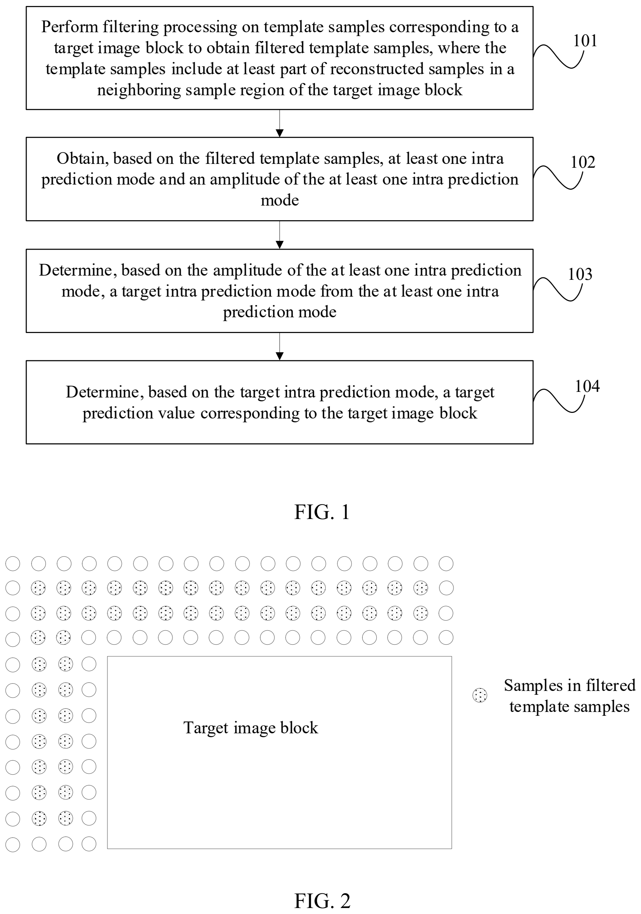

As shown in FIG. 1, an embodiment of this application provides an intra prediction method, including the following steps.

Step 101: Perform filtering processing on template samples corresponding to a target image block to obtain filtered template samples, where the template samples include at least part of reconstructed samples in a neighboring sample region of the target image block.

The target image block is an image block that needs intra prediction.

Optionally, a distance between samples in the neighboring sample region and samples of the target image block is less than or equal to a preset distance.

Step 102: Obtain, based on the filtered template samples, at least one intra prediction mode and an amplitude of the at least one intra prediction mode.

Optionally, when all samples in the template samples are filtered, at least one intra prediction mode and an amplitude of the at least one intra prediction mode are obtained based on the filtered template samples.

When part of samples in the template samples are filtered, at least one intra prediction mode and an amplitude of the at least one intra prediction mode are obtained based on the filtered template samples and unfiltered template samples, or based on the filtered template samples.

It should be noted that in the embodiments of this application, the filtered template samples refer to reconstructed samples in the template samples that have undergone filtering processing, and the unfiltered template samples refer to reconstructed samples in the template samples that have not undergone filtering processing.

Step 103: Determine, based on the amplitude of the at least one intra prediction mode, a target intra prediction mode from the at least one intra prediction mode.

In an implementation, M intra prediction modes with the largest amplitude are selected from the at least two intra prediction modes as the target intra prediction mode, where M is a positive integer.

Optionally, M is less than N, where N is the number of intra prediction modes determined based on unfiltered template samples and used for predicting the target image block, and N is a positive integer.

Herein, based on the M intra prediction modes with the largest amplitude, intra prediction modes of a dominant texture direction in the template samples can be obtained, which can achieve the purpose of performing prediction based on the dominant texture direction while reducing coding complexity.

Step 104: Determine, based on the target intra prediction mode, a target prediction value corresponding to the target image block.

When the target intra prediction mode includes at least two prediction modes, a prediction value obtained by predicting the target image block based on each of the prediction modes is obtained; and the target prediction value of the target image block is obtained based on the at least two prediction values.

For example, the at least two prediction values are processed based on a preset algorithm to obtain the target prediction value of the target image block. The preset algorithm may be a weighted averaging algorithm.

In the embodiments of this application, filtering processing is performed on template samples corresponding to a target image block to obtain filtered template samples, where the template samples include at least part of reconstructed samples in a neighboring sample region of the target image block; at least one intra prediction mode and an amplitude of the at least one intra prediction mode are obtained based on the filtered template samples; a target intra prediction mode is determined from the at least one intra prediction mode based on the amplitude of the at least one intra prediction mode; and a target prediction value corresponding to the target image block is determined based on the target intra prediction mode. In the above solution, performing filtering on the template samples allows an amplitude of an intra prediction mode corresponding to a dominant texture direction of the template samples to be more prominent, so that a target intra prediction mode that can reflect the dominant texture direction of the target image block can be obtained based on the filtered template samples, and then prediction accuracy can be effectively improved based on the target intra prediction mode.

Optionally, the obtaining at least one intra prediction mode corresponding to the filtered template samples and an amplitude of the at least one intra prediction mode includes:

obtaining, based on the filtered template samples, a template sample histogram, where the template sample histogram is used to indicate a correspondence between an identifier of at least one intra prediction mode and an amplitude of the intra prediction mode; and

obtaining, based on the template sample histogram, the at least one intra prediction mode and the amplitude of the at least one intra prediction mode.

Optionally, when all samples in the template samples are filtered, a template sample histogram is obtained based on the filtered template samples. When part of samples in the template samples are filtered, a template sample histogram is obtained based on the filtered template samples and unfiltered template samples.

For example, horizontal and vertical Sobel filters may be applied to the filtered template samples to perform gradient histogram calculation, then a gradient direction is converted into an intra angular prediction mode, and gradient intensities are accumulated as an amplitude of the corresponding intra angular prediction mode. For example, the gradient direction is

$$O = \operatorname{atan}\left(\frac{G_y}{G_x}\right)$$, where $G_x$ represents a horizontal gradient calculated based on the template samples, $G_y$ represents a vertical gradient calculated based on the template samples, and the amplitude $G = |G_x| + |G_y|$.

Through filtering on the template samples, the dominant texture direction in the template samples can be enhanced, so that the intra prediction mode of the dominant texture direction can be obtained based on the filtered template samples, making the prediction result more accurate.

Optionally, the performing filtering processing on template samples corresponding to a target image block to obtain filtered template samples includes:

when a filtering identifier corresponding to the target image block is a first filtering identifier, performing filtering processing on the template samples corresponding to the target image block to obtain the filtered template samples, where the first filtering identifier is used to indicate to perform filtering processing on the template samples corresponding to the target image block; or

when a value of a first target parameter of the template samples is less than or equal to a preset threshold, performing filtering processing on the template samples corresponding to the target image block to obtain the filtered template samples; where

the first target parameter includes at least one of noise intensity, image energy, and image entropy.

In the embodiments of this application, the first filtering identifier may be obtained from a bitstream or derived at a decoder side. For example, the filtering identifier being 1 (that is, the first filtering identifier) indicates to perform filtering processing on the template samples corresponding to the target image block; and the filtering identifier being 0 (a second filtering identifier) indicates to perform no filtering processing on the template samples corresponding to the target image block.

In the embodiments of this application, the noise intensity may be obtained in the following manner: performing statistical analysis on sample values of an image, calculating an indicator such as a mean, a variance, or a standard deviation of the image, and determining a noise intensity of the image based on the indicator.

In the embodiments of this application, the image energy may be obtained in the following manner: summing squares of all sample values in an image, and dividing a sum result by the total number of samples to obtain the image energy.

In the embodiments of this application, the image entropy may be obtained in the following manner: obtaining an occurrence probability of each sample value in an image, multiplying the occurrence probability of each sample value by a logarithm of the probability to obtain a multiplication result, and summing a plurality of multiplication results, to obtain the image entropy.

In the embodiments of this application, when the value of the first target parameter is greater than the preset threshold, filtering may cause the image to become distorted or unclear, making the histogram statistics inaccurate. Therefore, filtering is performed on the template samples only when the value of the first target parameter is less than or equal to the preset threshold, thereby improving the histogram statistics accuracy.

It should be noted that in the embodiments of this application, the filtering identifier may be at the frame level (that is, each image frame corresponds to one filtering identifier) or at the block level (that is, one image block corresponds to one filtering identifier).

Optionally, the method in the embodiments of this application further includes:

when the value of the first target parameter of the template samples is less than or equal to the preset threshold, determining that the filtering identifier corresponding to the target image block is the first filtering identifier; or

when the value of the first target parameter of the template samples is greater than or equal to the preset threshold, determining that the filtering identifier corresponding to the target image block is a second filtering identifier.

Optionally, the performing filtering processing on template samples corresponding to a target image block to obtain filtered template samples includes:

determining a target filter based on a target filtering strength identifier corresponding to the target image block, where the target filter corresponds to the target filtering strength identifier, or determining a target filter based on a value of a second target parameter of the template samples, where the second target parameter includes at least one of noise intensity, image energy, and image entropy; and performing filtering processing on the template samples corresponding to the target image block based on the target filter to obtain the filtered template samples.

In the embodiments of this application, the second target parameter may be the same as or different from the first target parameter.

Since a filter enhances noise in an image, a strength of the filter needs to be controlled in using the filter for filtering, to avoid excessive enhancement of the image.

In an implementation, the decoder side determines the target filter based on the target filtering strength identifier, where the target filtering strength identifier may be obtained from a bitstream or derived at the decoder side. When the target filtering strength identifier is derived at the decoder side, optionally, the method in the embodiments of this application further includes: determining, based on the second target parameter of the template samples, the target filtering strength identifier corresponding to the target image block, where different noise intensities correspond to different target filtering strength identifiers.

For example, when the filtering strength identifier is 0, the corresponding target filter is:

$$F0 = \begin{bmatrix} -1 & -1 & -1 \\ -1 & 9 & -1 \\ -1 & -1 & -1 \end{bmatrix};$$

when the filtering strength identifier is 1, the corresponding target filter is:

$$F1 = \begin{bmatrix} -1 & -1 & -1 \\ -1 & 6 & -1 \\ -1 & -1 & -1 \end{bmatrix};$$

when the filtering strength identifier is 2, the corresponding target filter is:

$$F2 = \begin{bmatrix} -1 & -1 & -1 \\ -1 & 4 & -1 \\ -1 & -1 & -1 \end{bmatrix}.$$

A smaller filtering strength identifier of 0 indicates a higher filtering strength of the corresponding target filter. To be specific, a filtering strength of filter F0 is greater than a filtering strength of filter F1, and the filtering strength of filter F1 is greater than a filtering strength of filter F2.

In another implementation, the decoder side directly determines the target filter based on the value of the second target parameter of the template samples. Specifically, the noise intensity of the image is determined based on the value of the second target parameter, and the target filter is determined based on the noise intensity of the image.

For example, if the noise intensity is less than threshold 1, filter F0 is selected; if the noise intensity is greater than threshold 1 and less than threshold 2, filter F1 is selected; and if the noise intensity is greater than threshold 2, filter F2 is selected.

Optionally, the target filter includes at least one of a high-pass filter and a low-pass filter.

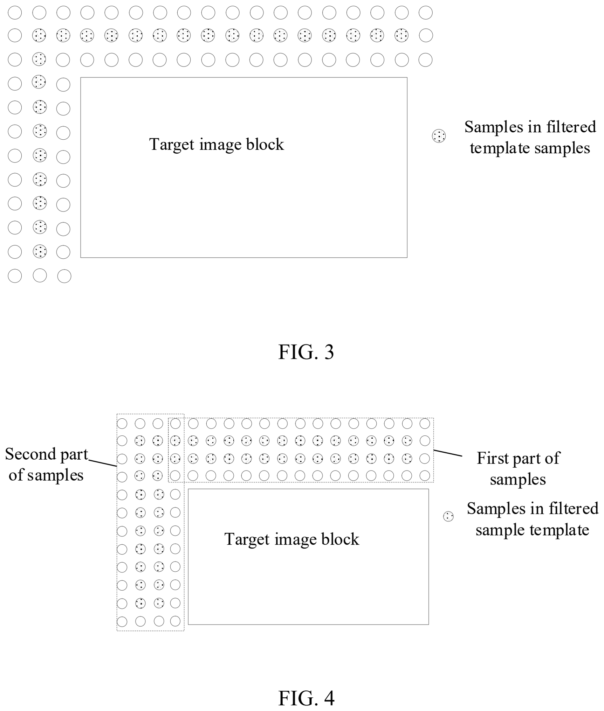

Assuming that filter F1 is used to perform filtering processing on the template samples, an S-row and S-column filtered sample template is obtained. In the case of S=2, the filtered sample template is shown in FIG. 2; in the case of S=1, the filtered sample template is shown in FIG. 3.

As shown in FIG. 4, after the filtered sample template is obtained, a 2x3 operator may be used to calculate the gradient of the template samples (a first part of samples) above the target image block, and a 3x2 operator may be used to calculate the gradient of the template samples (a second part of samples) on the left side of the target image block.

For example, in the embodiments of this application, a high-pass filter may be used to filter the chroma component and the luma component, or a high-pass filter may be used to filter the luma component and a low-pass filter may be used to filter the chroma component.

Specifically, for the luma component, at most M-1 intra prediction modes and their corresponding weights as well as the planar mode (with a fixed weight of 16/64) are derived from the histogram, so at most M intra prediction modes are fused to obtain a final luma prediction value. Optionally, M is less than 5.

For the chroma component, before the horizontal gradient and vertical gradient are calculated based on the reconstructed luma samples at the corresponding positions of the target chroma block corresponding to the target image block, a low-pass filter is used to filter the reconstructed luma samples.

Optionally, the low-pass filter may be the following filter:

$$F = \begin{bmatrix} 1 & 1 & 1 \\ 1 & 8 & 1 \\ 1 & 1 & 1 \end{bmatrix}.$$

Since the characteristics of the chroma component are typically composed of color changes, color textures, and the like in the image, these characteristics typically do not have strong directionality in space. Based on the low-pass filter, sample values can be averaged, so that noise and details of surrounding samples can be averaged, thereby reducing noise and details in the image and making the image smoother.

Optionally, the performing filtering processing on template samples corresponding to a target image block to obtain filtered template samples includes:

when a template position identifier of the template samples is a first position identifier, performing filtering processing on a first part of samples in the template samples to obtain the filtered template samples; or
when the template position identifier of the template samples is a second position identifier, performing filtering processing on a second part of samples in the template samples to obtain the filtered template samples; or
when the template position identifier of the template samples is a third position identifier, performing filtering processing on a first part of samples and a second part of samples in the template samples to obtain the filtered template samples; or
performing filtering on a part of samples with a smaller noise intensity among a first part of samples and a second part of samples to obtain the filtered template samples; where
the first part of samples includes samples in the template samples in a first direction of the target image block, and the second part of samples includes samples in the template samples in a second direction of the target image block.

In an example, the first direction is above, and the second direction is left. That is, the first part of samples includes samples in the template samples located above the target image block, and the second part of samples include samples in the template samples located on the left side of the target image block.

For example, when the template position identifier is 1 (the first position identifier), filtering processing is performed on the first part of samples; when the template position identifier is 0 (the second position identifier), filtering processing is performed on the second part of samples; when the template position identifier is 2 (the third position identifier), filtering processing is performed on the first part of samples and the second part of samples.

For another example, the noise intensities of the first part of samples and the second part of samples are separately calculated; if the noise intensity of the first part of samples is less than the noise intensity of the second part of samples, filtering processing is performed on the first part of samples; and if the noise intensity of the first part of samples is greater than the noise intensity of the second part of samples, filtering processing is performed on the second part of samples.

Optionally, when the template position identifier of the template samples is a fourth position identifier, filtering processing is performed on a third part of samples in the target samples to obtain the filtered template samples;

when the template position identifier of the template samples is a fifth position identifier, filtering processing is performed on a fourth part of samples in the target samples to obtain the filtered template samples;
when the template position identifier of the template samples is a sixth position identifier, filtering processing is performed on a fifth part of samples in the target samples to obtain the filtered template samples; and
when the template position identifier of the template samples is a seventh position identifier, filtering processing is performed on a sixth part of samples in the target samples to obtain the filtered template samples.

The third part of samples includes samples in the template samples in a third direction of the target image block, the fourth part of samples includes samples in the template samples in a fourth direction of the target image block, the fifth part of samples includes samples in the template samples in a fifth direction of the target image block, the sixth part of samples includes samples in the template samples in a sixth direction of the target image block, and the seventh part of samples includes samples in the template samples in a seventh direction of the target image block.

For example, the third direction may specifically be upper left, the fourth direction may specifically be right, the fifth direction may specifically be below, and the seventh direction may be lower right. Certainly, in the embodiments of this application, filtering processing may also be performed on the part of samples located in the upper right direction, lower left direction, and the like of the target image by setting corresponding position identifiers, which is not specifically described herein.

For example, when filtering processing is performed on all samples in the template samples, a template sample histogram is obtained based on the filtered template samples; when filtering processing is performed on the first part of samples a template sample histogram may be obtained based on the filtered template samples and unfiltered template samples (such as the second part of template samples); when filtering processing is performed on the second part of samples, a template sample histogram may be obtained based on the filtered template samples and unfiltered template samples (such as the first part of template samples).

In the above solution of the embodiments of this application, filtering processing is performed on template samples corresponding to a target image block to obtain filtered template samples, where the template samples include at least part of reconstructed samples in a neighboring sample region of the target image block; at least one intra prediction mode and an amplitude of the at least one intra prediction mode are obtained based on the filtered template samples; a target intra prediction mode is determined from the at least one intra prediction mode based on the amplitude of the at least one intra prediction mode; and a target prediction value corresponding to the target image block is determined based on the target intra prediction mode. In the above solution, performing filtering on the template samples allows an amplitude of an intra prediction mode corresponding to a dominant texture direction of the template samples to be more prominent, so that a target intra prediction mode that can reflect the dominant texture direction of the target image block can be obtained based on the filtered template samples, and then prediction accuracy can be effectively improved based on the target intra prediction mode.

The intra prediction method in the embodiments of this application may be executed by an intra prediction apparatus. In the embodiments of this application, the intra prediction apparatus executing the intra prediction method is taken as an example to illustrate an intra prediction apparatus according to an embodiment of this application.

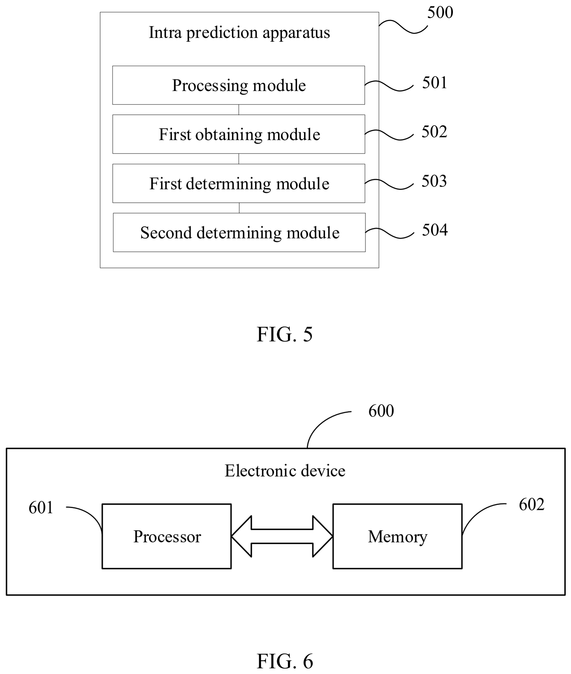

As shown in FIG. 5, an embodiment of this application further provides an intra prediction apparatus 500 including:

a processing module 501 configured to perform filtering processing on template samples corresponding to a target image block to obtain filtered template samples, where the template samples include at least part of reconstructed samples in a neighboring sample region of the target image block;

a first obtaining module 502 configured to obtain, based on the filtered template samples, at least one intra prediction mode and an amplitude of the at least one intra prediction mode;

a first determining module 503 configured to determine, based on the amplitude of the at least one intra prediction mode, a target intra prediction mode from the at least one intra prediction mode; and

a second determining module 504 configured to determine, based on the target intra prediction mode, a target prediction value corresponding to the target image block.

Optionally, the first obtaining module includes:

a first obtaining sub-module configured to obtain, based on the filtered template samples, a template sample histogram, where the template sample histogram is used to indicate a correspondence between an identifier of at least one intra prediction mode and an amplitude of the intra prediction mode; and

a second obtaining sub-module configured to obtain, based on the template sample histogram, the at least one intra prediction mode and the amplitude of the at least one intra prediction mode.

Optionally, the processing module is configured to:

when a filtering identifier corresponding to the target image block is a first filtering identifier, perform filtering processing on the template samples corresponding to the target image block to obtain the filtered template samples, where the first filtering identifier is used to indicate to perform filtering processing on the template samples corresponding to the target image block; or

when a value of a first target parameter of the template samples is less than or equal to a preset threshold, perform filtering processing on the template samples corresponding to the target image block to obtain the filtered template samples; where the first target parameter includes at least one of noise intensity, image energy, and image entropy.

Optionally, the apparatus in the embodiments of this application further includes:

a third determining module configured to, when the value of the first target parameter of the template samples is less than or equal to the preset threshold, determine that the filtering identifier corresponding to the target image block is the first filtering identifier.

Optionally, the processing module includes:

a first determining sub-module configured to determine a target filter based on a target filtering strength identifier corresponding to the target image block, where the target filter corresponds to the target filtering strength identifier, or determine a target filter based on a value of a second target parameter of the template samples, where the second target parameter includes at least one of noise intensity, image energy, and image entropy; and
a third obtaining sub-module configured to perform filtering processing on the template samples corresponding to the target image block based on the target filter to obtain the filtered template samples.

Optionally, the apparatus in the embodiments of this application further includes:
a fourth determining module configured to determine, based on the second target parameter of the template samples, the target filtering strength identifier corresponding to the target image block, where different noise intensities correspond to different target filtering strength identifiers.

Optionally, the target filter includes at least one of a high-pass filter and a low-pass filter.

Optionally, the processing module is configured to:

when a template position identifier of the template samples is a first position identifier, perform filtering processing on a first part of samples in the template samples to obtain the filtered template samples; or
when the template position identifier of the template samples is a second position identifier, perform filtering processing on a second part of samples in the template samples to obtain the filtered template samples; or
when the template position identifier of the template samples is a third position identifier, perform filtering processing on a first part of samples and a second part of samples in the template samples to obtain the filtered template samples; or
perform filtering on a part of samples with a smaller noise intensity among a first part of samples and a second part of samples to obtain the filtered template samples; where
the first part of samples includes samples in a first direction of the target image block in the template samples, and the second part of samples includes samples in a second direction of the target image block in the template samples.

Optionally, the first determining module is configured to:
select M intra prediction modes with the largest amplitude from at least two intra prediction modes as the target intra prediction modes, where M is a positive integer.

Optionally, the second determining module is configured to:

when the target intra prediction mode includes at least two prediction modes, obtain a prediction value obtained by predicting the target image block based on each of the prediction modes; and
obtain the target prediction value of the target image block based on the at least two prediction values.

In the embodiments of this application, filtering processing is performed on template samples corresponding to a target image block to obtain filtered template samples, where the template samples include at least part of reconstructed samples in a neighboring sample region of the target image block; at least one intra prediction mode and an amplitude of the at least one intra prediction mode are obtained based on the filtered template samples; a target intra prediction mode is determined from the at least one intra prediction mode based on the amplitude of the at least one intra prediction mode; and a target prediction value corresponding to the target image block is determined based on the target intra prediction mode. In the above solution, performing filtering on the template samples allows an amplitude of an intra prediction mode corresponding to a dominant texture direction of the template samples to be more prominent, so that a target intra prediction mode that can reflect the dominant texture direction of the target image block can be obtained based on the filtered template samples, and then prediction accuracy can be effectively improved based on the target intra prediction mode.

The intra prediction apparatus in the embodiments of this application may be an electronic device, such as an electronic device having an operating system, or a component in an electronic device, such as an integrated circuit or a chip. The electronic device may be a terminal or another device different from a terminal. For example, the another device may be a server, a network attached storage (NAS), or the like, which is not specifically limited in the embodiments of this application.

The intra prediction apparatus provided in the embodiments of this application can implement each process implemented by the method embodiment of FIG. 1, with the same technical effects achieved. To avoid repetition, details are not described herein again.

Optionally, as shown in FIG. 6, an embodiment of this application further provides an electronic device 600 including a processor 601 and a memory 602. The memory 602 stores a program or instructions capable of running on the processor 601, and when the program or instructions are executed by the processor 601, the steps of the foregoing intra prediction method embodiment are implemented, with the same technical effects achieved. To avoid repetition, details are not described herein again.

An embodiment of this application further provides an intra prediction apparatus including a processor and a communication interface. The processor is configured to: perform filtering processing on template samples corresponding to a target image block to obtain filtered template samples, where the template samples include at least part of reconstructed samples in a neighboring sample region of the target image block; obtain, based on the filtered template samples, at least one intra prediction mode and an amplitude of the at least one intra prediction mode; determine, based on the amplitude of the at least one intra prediction mode, a target intra prediction mode from the at least one intra prediction mode; and determine, based on the target intra prediction mode, a target prediction value corresponding to the target image block.

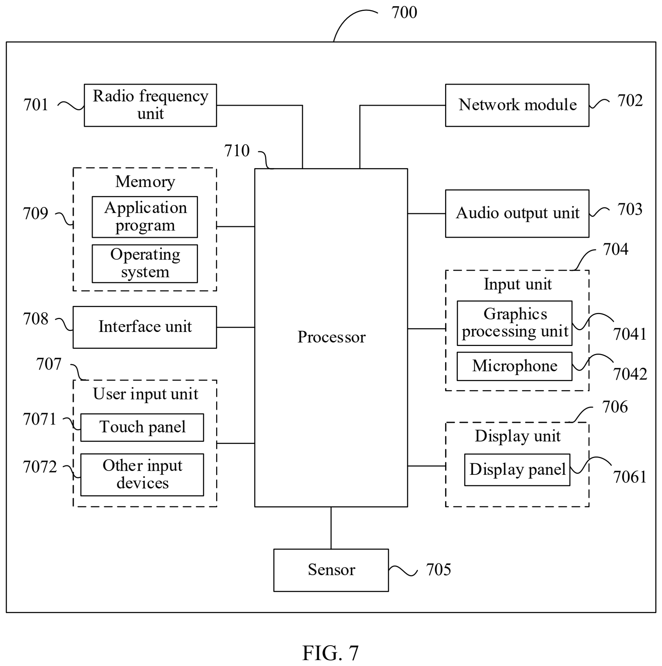

Specifically, FIG. 7 is a schematic diagram of a hardware structure of an intra prediction apparatus for implementing an embodiment of this application. The apparatus may specifically be a terminal. The terminal 700 includes but is not limited to at least some of components such as a radio frequency unit 701, a network module 702, an audio output unit 703, an input unit 704, a sensor 705, a display unit 706, a user input unit 707, an interface unit 708, a memory 709, and a processor 710.

Persons skilled in the art can understand that the terminal 700 may further include a power supply (for example, a battery) supplying power to the components, and the power supply may be logically connected to the processor 710 through a power management system, so as to implement functions such as charging management, discharging management, and power consumption management by using the power management system. The structure of the terminal shown in FIG. 7 does not constitute any limitation on the terminal. The terminal may include more or fewer components than shown in the figure, or a combination of some components, or the components disposed differently. Details are not described herein.

It should be understood that in the embodiments of this application, the input unit 704 may include a graphics processing unit (GPU) 7041 and a microphone 7042. The graphics processing unit 7041 processes image data of a still picture or video obtained by an image capture apparatus (such as a camera) in a video capture mode or an image capture mode. The display unit 706 may include a display panel 7061, and the display panel 7061 may be configured in a form of a liquid crystal display, an organic light-emitting diode, or the like. The user input unit 707 includes at least one of a touch panel 7071 and other input devices 7072. The touch panel 7071 is also referred to as a touchscreen. The touch panel 7071 may include two parts: a touch detection apparatus and a touch controller. The other input devices 7072 may include but are not limited to a physical keyboard, a function key (such as a volume control key or an on/off key), a trackball, a mouse, and a joystick. Details are not described herein.

In the embodiments of this application, after receiving downlink data from the network-side device, the radio frequency unit 701 can transmit the downlink data to the processor 710 for processing. In addition, the radio frequency unit 701 can send uplink data to the network-side device. Typically, the radio frequency unit 701 includes but is not limited to an antenna, an amplifier, a transceiver, a coupler, a low noise amplifier, and a duplexer.

The memory 709 may be configured to store a software program or instructions and various data. The memory 709 may mainly include a first storage area for storing programs or instructions and a second storage area for storing data. The first storage area may store an operating system, an application program or instructions required by at least one function (for example, a sound play function or an image play function), and the like. Additionally, the memory 709 may include a volatile memory or a non-volatile memory. The non-volatile memory may be a read-only memory (ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchronous link dynamic random access memory (Synch link DRAM, SLDRAM), or a direct rambus random access memory (Direct Rambus RAM, DRRAM). The memory 709 in the embodiment of this application includes but is not limited to these and any other suitable types of memory.

The processor 710 may include one or more processing units. Optionally, the processor 710 integrates an application processor and a modem processor. The application processor primarily processes operations involving an operating system, a user interface, an application program, or the like. The modem processor primarily processes radio communication signals, for example, being a baseband processor. It can be understood that the modem processor may alternatively be not integrated into the processor 710.

The processor 710 is configured to: perform filtering processing on template samples corresponding to a target image block to obtain filtered template samples, where the template samples include at least part of reconstructed samples in a neighboring sample region of the target image block; obtain at least one intra prediction mode corresponding to the filtered template samples and an amplitude of the at least one intra prediction mode; determine, based on the amplitude of the at least one intra prediction mode, a target intra prediction mode from the at least one intra prediction mode; and determine, based on the target intra prediction mode, a target prediction value corresponding to the target image block.

Optionally, the processor 710 is further configured to:

obtain, based on the filtered template samples, a template sample histogram, where the template sample histogram is used to indicate a correspondence between an identifier of at least one intra prediction mode and an amplitude of the intra prediction mode; and

obtain, based on the template sample histogram, the at least one intra prediction mode and the amplitude of the at least one intra prediction mode.

Optionally, the processor 710 is further configured to:

when a filtering identifier corresponding to the target image block is a first filtering identifier, perform filtering processing on the template samples corresponding to the target image block to obtain the filtered template samples, where the first filtering identifier is used to indicate to perform filtering processing on the template samples corresponding to the target image block; or

when a value of a first target parameter of the template samples is less than or equal to a preset threshold, perform filtering processing on the template samples corresponding to the target image block to obtain filtered template samples; where

the first target parameter includes at least one of noise intensity, image energy, and image entropy.

Optionally, the processor 710 is further configured to:
when the value of the first target parameter of the template samples is less than or equal to the preset threshold, determine that the filtering identifier corresponding to the target image block is the first filtering identifier.

Optionally, the processor 710 is further configured to:

determine a target filter based on a target filtering strength identifier corresponding to the target image block, where the target filter corresponds to the target filtering strength identifier, or determine a target filter based on a value of a second target parameter of the template samples, where the second target parameter includes at least one of noise intensity, image energy, and image entropy; and

perform filtering processing on the template samples corresponding to the target image block based on the target filter to obtain the filtered template samples.

Optionally, the processor 710 is further configured to:
determine, based on the second target parameter of the template samples, the target filtering strength identifier corresponding to the target image block, where different noise intensities correspond to different target filtering strength identifiers.

Optionally, the target filter includes at least one of a high-pass filter and a low-pass filter.

Optionally, the processor 710 is further configured to:

when a template position identifier of the template samples is a first position identifier, perform filtering processing on a first part of samples in the template samples to obtain the filtered template samples; or

when the template position identifier of the template samples is a second position identifier, perform filtering processing on a second part of samples in the template samples to obtain the filtered template samples; or

when the template position identifier of the template samples is a third position identifier, perform filtering processing on a first part of samples and a second part of samples in the template samples to obtain the filtered template samples; or

perform filtering on a part of samples with a smaller noise intensity among a first part of samples and a second part of samples to obtain the filtered template samples; where

the first part of samples includes samples in a first direction of the target image block in the template samples, and the second part of samples includes samples in a second direction of the target image block in the template samples.

Optionally, the processor 710 is further configured to:
select M intra prediction modes with the largest amplitude from at least two intra prediction modes as the target intra prediction modes, where M is a positive integer.

Optionally, the processor 710 is further configured to:

when the target intra prediction mode includes at least two prediction modes, obtain a prediction value obtained by predicting the target image block based on each of the prediction modes; and

obtain the target prediction value of the target image block based on the at least two prediction values.

In the embodiments of this application, filtering processing is performed on template samples corresponding to a target image block to obtain filtered template samples, where the template samples include at least part of reconstructed samples in a neighboring sample region of the target image block; at least one intra prediction mode and an amplitude of the at least one intra prediction mode are obtained based on the filtered template samples; a target intra prediction mode is determined from the at least one intra prediction mode based on the amplitude of the at least one intra prediction mode; and a target prediction value corresponding to the target image block is determined based on the target intra prediction mode. In the above solution, performing filtering on the template samples allows an amplitude of an intra prediction mode corresponding to a dominant texture direction of the template samples to be more prominent, so that a target intra prediction mode that can reflect the dominant texture direction of the target image block can be obtained based on the filtered template samples, and then prediction accuracy can be effectively improved based on the target intra prediction mode.

An embodiment of this application further provides a readable storage medium, where the readable storage medium stores a program or instructions, and when the program or instructions are executed by a processor, the processes of the foregoing intra prediction method embodiment are implemented, with the same technical effects achieved. To avoid repetition, details are not described herein again.

The processor is the processor in the terminal described in the foregoing embodiments. The readable storage medium includes a computer-readable storage medium, such as a computer read-only memory ROM, a random access memory RAM, a magnetic disk, or an optical disc. In some examples, the readable storage medium may be a non-transitory readable storage medium.

An embodiment of this application further provides a chip. The chip includes a processor and a communication interface, where the communication interface is coupled to the processor, and the processor is configured to run a program or instructions to implement the processes of the foregoing intra prediction method embodiment, with the same technical effects achieved. To avoid repetition, details are not described herein again.

It should be understood that the chip mentioned in the embodiments of this application may also be referred to as a system-level chip, a system chip, a chip system, a system-on-chip chip, or the like.

An embodiment of this application further provides a computer program/program product, where the computer program/program product is stored in a storage medium, and the computer program/program product is executed by at least one processor to implement the processes of the foregoing intra prediction method embodiment, with the same technical effects achieved. To avoid repetition, details are not described herein again.

It should be noted that in this specification, the terms "include" and "comprise", or any of their variants are intended to cover a non-exclusive inclusion, such that a process, method, article, or apparatus that includes a list of elements not only includes those elements but also includes other elements that are not expressly listed, or further includes elements inherent to such process, method, article, or apparatus. In absence of more constraints, an element preceded by "includes a..." does not preclude the existence of other identical elements in the process, method, article, or apparatus that includes the element. Furthermore, it should be noted that the scope of the methods and apparatuses in the embodiments of this application is not limited to performing the functions in the order shown or discussed, but may also include performing the functions in a substantially simultaneous manner or in a reverse order depending on the functions involved. For example, the described methods may be performed in an order different from that described, and various steps may be added, omitted, or combined. In addition, features described with reference to some examples may be combined in other examples.

By means of the foregoing description of the implementations, a person skilled in the art may clearly understand that the method in the foregoing embodiments may be implemented by a computer software product with a necessary general hardware platform. Certainly, the method in the foregoing embodiments may also be implemented by hardware. The computer software product is stored in a storage medium (such as a ROM, a RAM, a magnetic disk, or an optical disc), and includes several instructions for instructing a terminal or a network-side device to perform the methods described in the embodiments of this application.

The foregoing describes the embodiments of this application with reference to the accompanying drawings. However, this application is not limited to the foregoing specific embodiments. The foregoing specific embodiments are merely illustrative rather than restrictive. As inspired by this application, a person of ordinary skill in the art may develop many other implementations without departing from principles of this application and the protection scope of the claims, and all such implementations shall fall within the protection scope of this application.

**Claims**

1. An intra prediction method, comprising:

   performing filtering processing on template samples corresponding to a target image block to obtain filtered template samples, wherein the template samples comprise at least part of reconstructed samples in a neighboring sample region of the target image block;
   obtaining, based on the filtered template samples, at least one intra prediction mode and an amplitude of the at least one intra prediction mode;
   determining, based on the amplitude of the at least one intra prediction mode, a target intra prediction mode from the at least one intra prediction mode; and
   determining, based on the target intra prediction mode, a target prediction value corresponding to the target image block.

**2.** The method according to claim 1, wherein the obtaining, based on the filtered template samples, at least one intra prediction mode and an amplitude of the at least one intra prediction mode comprises:

obtaining, based on the filtered template samples, a template sample histogram, wherein the template sample histogram is used to indicate a correspondence between an identifier of at least one intra prediction mode and an amplitude of the intra prediction mode; and
obtaining, based on the template sample histogram, the at least one intra prediction mode and the amplitude of the at least one intra prediction mode.

**3.** The method according to claim 1 or 2, wherein the performing filtering processing on template samples corresponding to a target image block to obtain filtered template samples comprises:

when a filtering identifier corresponding to the target image block is a first filtering identifier, performing filtering processing on the template samples corresponding to the target image block to obtain the filtered template samples, wherein the first filtering identifier is used to indicate to perform filtering processing on the template samples corresponding to the target image block; or
when a value of a first target parameter of the template samples is less than or equal to a preset threshold, performing filtering processing on the template samples corresponding to the target image block to obtain the filtered template samples; wherein
the first target parameter comprises at least one of noise intensity, image energy, and image entropy.

**4.** The method according to claim 3, wherein the method further comprises:
when the value of the first target parameter of the template samples is less than or equal to the preset threshold, determining that the filtering identifier corresponding to the target image block is the first filtering identifier.

**5.** The method according to any one of claims 1 to 4, wherein the performing filtering processing on template samples corresponding to a target image block to obtain filtered template samples comprises:

determining a target filter based on a target filtering strength identifier corresponding to the target image block, wherein the target filter corresponds to the target filtering strength identifier, or determining a target filter based on a value of a second target parameter of the template samples, wherein the second target parameter comprises at least one of noise intensity, image energy, and image entropy; and
performing filtering processing on the template samples corresponding to the target image block based on the target filter to obtain the filtered template samples.

**6.** The method according to claim 5, wherein the method further comprises:
determining, based on the second target parameter of the template samples, the target filtering strength identifier corresponding to the target image block, wherein different noise intensities correspond to different target filtering strength identifiers.

**7.** The method according to any one of claims 1 to 6, wherein the performing filtering processing on template samples corresponding to a target image block to obtain filtered template samples comprises:

when a template position identifier of the template samples is a first position identifier, performing filtering processing on a first part of samples in the template samples to obtain the filtered template samples; or
when the template position identifier of the template samples is a second position identifier, performing filtering processing on a second part of samples in the template samples to obtain the filtered template samples; or
when the template position identifier of the template samples is a third position identifier, performing filtering processing on a first part of samples and a second part of samples in the template samples to obtain the filtered template samples; or
performing filtering on a part of samples with a smaller noise intensity among a first part of samples and a second part of samples to obtain the filtered template samples; wherein
the first part of samples comprises samples in a first direction of the target image block in the template samples, and the second part of samples comprises samples in a second direction of the target image block in the template samples.

**8.** The method according to any one of claims 1 to 7, wherein the determining, based on the amplitude of the at least one intra prediction mode, a target intra prediction mode from the at least one intra prediction mode comprises:
selecting M intra prediction modes with the largest amplitude from at least two intra prediction modes as the target intra prediction modes, wherein M is a positive integer.

9. The method according to any one of claims 1 to 8, wherein the determining, based on the target intra prediction mode, a target prediction value corresponding to the target image block comprises:

when the target intra prediction mode comprises at least two prediction modes, obtaining a prediction value obtained by predicting the target image block based on each of the prediction modes; and
obtaining the target prediction value of the target image block based on the at least two prediction values.

10. An intra prediction apparatus, comprising:

a processing module configured to perform filtering processing on template samples corresponding to a target image block to obtain filtered template samples, wherein the template samples comprise at least part of reconstructed samples in a neighboring sample region of the target image block;
a first obtaining module configured to obtain, based on the filtered template samples, at least one intra prediction mode and an amplitude of the at least one intra prediction mode;
a first determining module configured to determine, based on the amplitude of the at least one intra prediction mode, a target intra prediction mode from the at least one intra prediction mode; and
a second determining module configured to determine, based on the target intra prediction mode, a target prediction value corresponding to the target image block.

11. The apparatus according to claim 10, wherein the first obtaining module comprises:

a first obtaining sub-module configured to obtain, based on the filtered template samples, a template sample histogram, wherein the template sample histogram is used to indicate a correspondence between an identifier of at least one intra prediction mode and an amplitude of the intra prediction mode; and
a second obtaining sub-module configured to obtain, based on the template sample histogram, the at least one intra prediction mode and the amplitude of the at least one intra prediction mode.

12. The apparatus according to claim 10 or 11, wherein the processing module is configured to:

when a filtering identifier corresponding to the target image block is a first filtering identifier, perform filtering processing on the template samples corresponding to the target image block to obtain the filtered template samples, wherein the first filtering identifier is used to indicate to perform filtering processing on the template samples corresponding to the target image block; or
when a value of a first target parameter of the template samples is less than or equal to a preset threshold, perform filtering processing on the template samples corresponding to the target image block to obtain the filtered template samples; wherein
the first target parameter comprises at least one of noise intensity, image energy, and image entropy.

13. The apparatus according to claim 12, wherein the apparatus further comprises:
a third determining module configured to, when the value of the first target parameter of the template samples is less than or equal to the preset threshold, determine that the filtering identifier corresponding to the target image block is the first filtering identifier.

14. The apparatus according to any one of claims 10 to 13, wherein the processing module comprises:

a first determining sub-module configured to determine a target filter based on a target filtering strength identifier corresponding to the target image block, wherein the target filter corresponds to the target filtering strength identifier, or determine a target filter based on a value of a second target parameter of the template samples, wherein the second target parameter comprises at least one of noise intensity, image energy, and image entropy; and
a third obtaining sub-module configured to perform filtering processing on the template samples corresponding to the target image block based on the target filter to obtain the filtered template samples.

15. The apparatus according to claim 14, wherein the apparatus further comprises:
a fourth determining module configured to determine, based on the second target parameter of the template samples, the target filtering strength identifier corresponding to the target image block, wherein different noise intensities correspond to different target filtering strength identifiers.

16. The apparatus according to any one of claims 10 to 15, wherein the processing module is configured to:

when a template position identifier of the template samples is a first position identifier, perform filtering processing on a first part of samples in the template samples to obtain the filtered template samples; or

when the template position identifier of the template samples is a second position identifier, perform filtering processing on a second part of samples in the template samples to obtain the filtered template samples; or

when the template position identifier of the template samples is a third position identifier, perform filtering processing on a first part of samples and a second part of samples in the template samples to obtain the filtered template samples; or

perform filtering on a part of samples with a smaller noise intensity among a first part of samples and a second part of samples to obtain the filtered template samples; wherein

the first part of samples comprises samples in a first direction of the target image block in the template samples, and the second part of samples comprises samples in a second direction of the target image block in the template samples.

17. The apparatus according to any one of claims 10 to 16, wherein the first determining module is configured to:

select M intra prediction modes with the largest amplitude from at least two intra prediction modes as the target intra prediction modes, wherein M is a positive integer.

18. The apparatus according to any one of claims 10 to 17, wherein the second determining module is configured to:

when the target intra prediction mode comprises at least two prediction modes, obtain a prediction value obtained by predicting the target image block based on each of the prediction modes; and

obtain the target prediction value of the target image block based on the at least two prediction values.

19. An electronic device, comprising a processor and a memory, wherein the memory stores a program or instructions capable of running on the processor, and when the program or instructions are executed by the processor, the steps of the intra prediction method according to any one of claims 1 to 9 are implemented.

20. A readable storage medium, wherein the readable storage medium stores a program or instructions, and when the program or instructions are executed by a processor, the steps of the intra prediction method according to any one of claims 1 to 9 are implemented.

Perform filtering processing on template samples corresponding to a target image block to obtain filtered template samples, where the template samples include at least part of reconstructed samples in a neighboring sample region of the target image block — 101

Obtain, based on the filtered template samples, at least one intra prediction mode and an amplitude of the at least one intra prediction mode — 102

Determine, based on the amplitude of the at least one intra prediction mode, a target intra prediction mode from the at least one intra prediction mode — 103

Determine, based on the target intra prediction mode, a target prediction value corresponding to the target image block — 104

FIG. 1

Target image block

Samples in filtered template samples

FIG. 2

FIG. 3

FIG. 4

Intra prediction apparatus — 500

Processing module — 501

First obtaining module — 502

First determining module — 503

Second determining module — 504

FIG. 5

600

Electronic device

601 — Processor ⟷ Memory — 602

FIG. 6

FIG. 7

## INTERNATIONAL SEARCH REPORT

| International application No. |
| --- |
| **PCT/CN2024/102805** |

| A. | CLASSIFICATION OF SUBJECT MATTER |
| --- | --- |

H04N 19/117(2014.01)i

According to International Patent Classification (IPC) or to both national classification and IPC

| B. | FIELDS SEARCHED |
| --- | --- |

Minimum documentation searched (classification system followed by classification symbols)

IPC:H04N

Documentation searched other than minimum documentation to the extent that such documents are included in the fields searched

Electronic data base consulted during the international search (name of data base and, where practicable, search terms used)

CNTXT, WPABS, DWPI, CNKI, ENTXT, VEN, CJFD: 帧内, 预测, 滤波, 模板, 振幅, 幅度, 像素, 直方图, intra-frame, prediction, filter, template, amplitude, histogram, pixel

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | US 2023090700 A1 (FG INNOVATION CO., LTD.) 23 March 2023 (2023-03-23) description, paragraphs 0075-0097 | 1-20 |
| A | CN 115883833 A (VIVO COMMUNICATION TECHNOLOGY CO., LTD.) 31 March 2023 (2023-03-31) entire document | 1-20 |
| A | CN 114868394 A (GOOGLE INC.) 05 August 2022 (2022-08-05) entire document | 1-20 |
| A | CN 115866263 A (VIVO COMMUNICATION TECHNOLOGY CO., LTD.) 28 March 2023 (2023-03-28) entire document | 1-20 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **12 September 2024** | **13 September 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

# EP 4 742 662 A1

**INTERNATIONAL SEARCH REPORT**
Information on patent family members

International application No.

**PCT/CN2024/102805**

| Patent document cited in search report | | | Publication date (day/month/year) | Patent family member(s) | | | Publication date (day/month/year) |
|---|---|---|---|---|---|---|---|
| US | 2023090700 | A1 | 23 March 2023 | WO | 2023036341 | A1 | 16 March 2023 |
| | | | | EP | 4402894 | A1 | 24 July 2024 |
| CN | 115883833 | A | 31 March 2023 | None | | | |
| CN | 114868394 | A | 05 August 2022 | None | | | |
| CN | 115866263 | A | 28 March 2023 | None | | | |

Form PCT/ISA/210 (patent family annex) (July 2022)

**EP 4 742 662 A1**

**Patent documents cited in the description**

- CN 202310818030